Europäisches Patentamt

European Patent Office

Office européen des brevets

(11) Publication number: **0 310 143 B1**

# EUROPEAN PATENT SPECIFICATION

(45) Date of publication of patent specification: **13.12.95**

(51) Int. Cl.⁶: **B32B 27/08**, B32B 27/16, A61J 1/10

(21) Application number: **88118317.2**

(22) Date of filing: **05.07.85**

(60) Publication number of the earlier application in accordance with Art.76 EPC: **0 199 871**

(54) Flexible medical solution pouches

(30) Priority: **29.04.85 US 728114**

(43) Date of publication of application:
**05.04.89 Bulletin 89/14**

(45) Publication of the grant of the patent:
**13.12.95 Bulletin 95/50**

(84) Designated Contracting States:
**BE CH DE FR GB IT LI NL SE**

(56) References cited:
**EP-A- 0 142 315**

(73) Proprietor: **W.R. Grace & Co.-Conn.**
**Grace Plaza,**
**1114 Avenue of the Americas**
**New York,**
**New York 10036 (US)**

(72) Inventor: **Mueller, Walter Berndt**
**Rt.2**
**Box 303H**
**Inman**
**South Carolina 29349 (US)**

(74) Representative: **Collier, Jeremy Austin Grey et al**
**J.A.KEMP & CO.**
**14, South Square**
**Gray's Inn**
**London WC1R 5LX (GB)**

EP 0 310 143 B1

**Description**

This invention relates to autoclavable flexible films suitable for the packaging of medical solutions.

Currently, it is common medical practice to supply liquids such as medical solutions for parenteral administration in the form of disposable, flexible pouches. These pouches should be characterized by collapsibility, transparency, and adequate mechanical strength. They must also be able to resist the relatively high temperatures required for heat sterilization of their contents, for example in an autoclave. Typically, medical solutions are autoclaved at 123°C (253°F) for periods of 15 to 30 minutes.

Presently, such flexible pouches are typically made from a highly plasticized polyvinyl chloride (PVC). While meeting the requirements mentioned above, polyvinyl chloride may have some undesirable properties for use as a medical solution pouch because of the possibility of migration of plasticizer from the polyvinyl chloride into the medical solution or the other contents of the pouch so that the solution may become contaminated by potentially toxic material. A question has also arisen concerning whether PVC is adequately chemically neutral to medical solutions. It has also been found that polyvinyl chloride becomes brittle at relatively low temperatures.

Embrittlement and stress-cracking, particularly of the outer surface of medical pouches, has been found to occur in other non-PVC pouches. It is desirable to provide a pouch for the packaging of medical solutions which substantially reduces or eliminates stress-cracking and embrittlement of the pouch material.

Of interest is U.S. Patent 4,401,536 issued to Lundell et al which discloses the use of a blend of medical grade radiation-stabilized polypropylene and a copolymer of ethylene and a comonomer selected from the group consisting of vinyl esters of saturated carboxylic acids and alkyl esters of alpha, beta ethylenically unsaturated carboxylic acids, the blend being irradiated.

EP-A-0 142 315, published after the priority date of the present application discloses, inter alia, films comprising an ethylene vinyl acetate copolymer layer and, on each side thereof, an ethylene propylene copolymer layer. The possibility of cross-linking at 10-60, preferably about 20 kGy (1-6, preferably about 2, MR) is mentioned. The Applicants have now discovered that certain specific films within the general scope of EP-A-0 142 315 possess advantageous properties.

The present invention provides a film suitable for the packaging of medical solutions. The film has good flexibility, good optical properties, a low degree of haze after autoclaving of the package, and high mechanical strength. In addition the film has sufficient barrier properties to eliminate or reduce the need for separate overwrap material to insure that the concentration of the medical solution in the pouch is not adversely affected.

DEFINITIONS

The terms "flexible" and "elastomeric" are used herein to define specific polymeric materials as well as characteristics of a resulting pouch or bag whereby improved flexibility and/or collapsibility of the pouch or bag is obtained by the use of these specific polymeric materials. Flexible materials may be characterized by a modulus of less than 344.7 MPa (50,000 PSI': $3.515 \times 10^6$ g/cm$^2$) (ASTM D-882-81) and more preferably less than 275.8 MPa (40,000 PSI: $2.812 \times 10^6$ g/cm$^2$) (ASTM D-882-81).

The term "film" refers to a thermoplastic material suitable for packaging and having one or more layers of polymeric materials which may be bonded by any suitable means well known in the art.

The term "polymer", "polymeric" unless specifically defined or otherwise limited, generally includes homopolymers, copolymers and terpolymers and blends and modifications thereof.

The term "interior" is used herein to refer to a layer of a multilayer film which is not a skin or surface layer, or sealant layer, of the film.

The term "melt flow" and "melt flow index" is used herein as the amount, in grams, of a thermoplastic resin which can be forced through a given orifice under a specified pressure and temperature within 10 minutes. The value should be determined in accordance with ASTM D 1238-79.

The term "ethylene vinyl acetate copolymer" (EVA) is used herein to refer to a copolymer formed from ethylene and vinyl acetate monomers wherein the ethylene derived units in the copolymer are present in major amounts and the vinyl acetate derived units in the copolymer are present in minor amounts.

The term "ethylene propylene copolymer" (EPC) is used herein to refer to a copolymer formed from polypropylene monomer and minor amounts, usually less than 6%, of ethylene.

The invention provides a flexible film comprising a layer of an ethylene vinyl acetate copolymer, and on each side of the said layer, a layer of an ethylene propylene copolymer, said film being cross-linked, the film having a modulus of less than 344.7 (50,000 PSI) MPa and being obtainable by cast coextrusion.

2

A flexible film in accordance with the invention comprises a sealant layer comprising ethylene propylene copolymer; an interior layer comprising an ethylene vinyl acetate copolymer which imparts flexibility to the film; and an outer layer comprising ethylene propylene copolymer, the said film being cross-linked.

BRIEF DESCRIPTION OF THE DRAWINGS

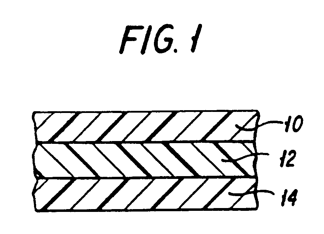

FIG. 1 is a schematic cross-section of a three layer film made in accordance with the invention.

DETAILED DESCRIPTION OF THE PREFERRED EMBODIMENTS

Figure 1 shows a three layer film in accordance with the invention. Sealing layer 10 is an ethylene propylene copolymer (EPC). A suitable EPC is Eltex KS (Trademark) 409X6206 available from Solvay. This copolymer has an ethylene content of about 3.8%. The sealing layer will be in contact with the medical solution or other material to be contained within flexible bags made from the flexible films of the present invention.

Interior layer 12 is an ethylene vinyl acetate copolymer (EVA).

Outside layer 14 of the three layer embodiment of the present invention is ethylene propylene copolymer.

The three-layer film of the invention is typically characterized by a second or interior layer which is considerably thicker than the remaining layers.

The films as described are preferably manufactured by a cast coextrusion process.

EXAMPLES

Exemplary multi-layer structures were cast coextruded and irradiated. These structures are viewed as potential replacements for polyvinyl chloride bags. Critical parameters which were measured include moisture barrier properties, tensile strength and elongation at break, and modulus of elasticity. Also important for medical solution applications are the optical properties such as haze, total transmission, and gloss. Examples 1 and 2, in part reflected in the detailed description of the preferred embodiments hereinbefore described, are listed below with their respective formulations, beginning with the outside layer and ending with the inside or sealant layer. Unless otherwise denoted, Examples 1 - 2 included the following materials:

EPC: Eltex KS409x6206

EVA: ELVAX 3175 (Trade Mark);

Example 1 is a control bag material comprising polyvinyl chloride.

Example 2 includes a core layer of EVA sandwiched between outer layers of EPC.

Tables 1 and 2 demonstrate the results of physical testing of Examples 1 and 2 for selected physical properties.

## TABLE I

### Example 1

| Tensile at Break and 23°C (73°F) | $(g/cm^2 \times 100)$ | $(PSI^1 \ (x\ 100))$ | $kPa \times 100$ |
|---|---|---|---|
| Av.[2] Long | 2700 | (38.4) | 264·8 |
| Std. Dev. | 154 | (2.2) | 15·2 |
| 95% C.L.[3] | 246 | (3.5) | 24·1 |
| Av. Trans. | 2570 | (36.5) | 251·7 |
| Std. Dev. | 168 | (2.4) | 16·5 |
| 95% C.L.[4] | 267 | (3.8) | 26·2 |
| Gauge Long.[4] $\mu$m (mils) | 344 | (13.53) | 93·3 |
| Std. Dev. | 19.1 | (0.75) | 5·2 |
| 95% C.L. | 30.2 | (1.19) | 8·2 |
| Gauge Trans. $\mu$m (mils) | 372 | (14.63) | 100·9 |
| Std. Dev. | 5.59 | (0.22) | 1·5 |
| 95% C.L. | 8.89 | (0.35) | 2·4 |

| Elongation at Break and 23°C (73°F) | $(g/cm^2)$ | $(PSI^5)$ | $kPa$ |
|---|---|---|---|
| Av. Long | 39400 | (560) | 3861·1 |
| Std. Dev. | 1410 | (20) | 137·9 |
| 95% C.L. | 2250 | (32) | 220·6 |
| Av. Trans. | 39500 | (562) | 3874·8 |
| Std. Dev. | 2950 | (42) | 289·6 |
| 95% C.L. | 4640 | (66) | 455·1 |

| Modulus at 23°C (73°F) | $(g/cm^2 \times 1000)$ | $(PSI^6 \ x\ (1000))$ | $kPa \times 1000$ |
|---|---|---|---|
| Av. Long | 344 | (4.9) | 33·8 |
| Std. Dev. | 14 | (0.2) | 1·4 |
| 95% C.L. | 21 | (0.3) | 2·1 |
| Av. Trans. | 379 | (5.4) | 37·2 |
| Std. Dev. | 21 | (0.3) | 2·1 |
| 95% C.L. | 28 | (0.4) | 2·8 |
| Gauge Long. $\mu$m (mils) | 361 | (14.22) | 98·0 |
| Std. Dev. | 11.4 | (0.45) | 3·1 |
| 95% C.L. | 18.0 | (0.71) | 4·9 |
| Gauge Trans. $\mu$m (mils) | 340 | (13.39) | 92·3 |
| Std. Dev. | 1.78 | (0.07) | 0·5 |
| 95% C.L. | 2.79 | (0.11) | 0·8 |

|                                                    | Example 1 |
| -------------------------------------------------- | --------- |
| Optical Properties 23°C (73°F)                     |           |
| **Haze (%)[7]**                                    |           |
| Avg.                                               | 2.6       |
| Std. Dev.                                          | 0.2       |
| 95% C.L                                            | 0.3       |
| Gauge μm (mils)                                    | 331 (13.03) |
| Std. Dev.                                          | 1.27 (0.05) |
| 95% C.L.                                           | 2.03 (0.08) |
| Total Transmission (%)[8]                          |           |
| Avg.                                               | 89.9      |
| Std. Dev.                                          | 0.2       |
| 95% C.L.                                           | 0.4       |
| **Gloss (45°)[9]**                                 |           |
| Avg.                                               | 73.      |
| Std. Dev.                                          | 1.       |
| 95% C.L.                                           | 1.       |
| Water Vapor Transmission at 38°C (100°F[10])       |           |
| Sample 1                                           | 0.58      |
| Sample 2                                           | 0.56      |
| Sample 3                                           | 0.51      |
| **Gauge μm (mils)**                                |           |
| Sample 1                                           | 344 (13.54) |
| Sample 2                                           | 369 (14.51) |
| Sample 3                                           | 371 (14.59) |

TABLE 2

EXAMPLE 2

Tensile at Break
and 23°C (73°F) $\left(\text{g/cm}^2 \times 100\right)$ (PSI[1] (x 100))   *kPa×100*

| | | | |
|---|---|---|---|
| Av.[2] Long | 1410 | (20.0) | 137.9 |
| Std. Dev. | 91 | (1.3) | 9.0 |
| 95% C.L.[3] | 141 | (2.0) | 13.8 |
| Av. Trans. | 3450 | (49.0) | 337.8 |
| Std. Dev. | 400 | (5.7) | 39.3 |
| 95% C.L. | 639 | (9.1) | 62.7 |
| Gauge Long.[4] $\mu$m (mils) | 217 | (8.54) | 58.9 |
| Std. Dev. | 9.65 | (0.38) | 2.6 |
| 95% C.L. | 15.5 | (0.61) | 4.2 |
| Gauge Trans. $\mu$m (mils) | 211 | (8.32) | 57.4 |
| Std. Dev. | 3.30 | (0.13) | 0.9 |
| 95% C.L. | 5.08 | (0.20) | 1.4 |

Elongation at
Break and 23°C (73°F) $\left(\text{g/cm}^2\right)$ (PSI[5])   *kPa*

| | | | |
|---|---|---|---|
| Av. Long | 37300 | (531) | 3661.1 |
| Std. Dev. | 2500 | (36) | 248.2 |
| 95% C.L. | 4010 | (57) | 393.0 |
| Av. Trans. | 74800 | (1064) | 7336.0 |
| Std. Dev. | 2880 | (41) | 282.7 |
| 95% C.L. | 4570 | (65) | 448.2 |

Modulus at
23°C (73°F) $\left(\text{g/cm}^2 \times 1000\right)$ (PSI[6] x (1000))   *kPa×1000*

| | | | |
|---|---|---|---|
| Av. Long | 1210 | (17.2) | 118.6 |
| Std. Dev. | 35 | (0.5) | 3.4 |
| 95% C.L. | 56 | (0.8) | 5.5 |
| Av. Trans. | 1060 | (15.1) | 104.1 |
| Std. Dev. | 77 | (1.1) | 7.6 |
| 95% C.L. | 120 | (1.7) | 11.7 |
| Gauge Long. $\mu$m (mils) | 220 | (8.65) | 59.6 |
| Std. Dev. | 10.7 | (0.42) | 2.9 |
| 95% C.L. | 17.0 | (0.67) | 4.6 |
| Gauge Trans. $\mu$m (mils) | 227 | (8.94) | 61.6 |
| Std. Dev. | 6.10 | (0.24) | 1.7 |
| 95% C.L. | 9.65 | (0.38) | 2.6 |

6

## EXAMPLE 2

Optical
Properties at 23°C (73°F)

Haze (%)[7]

| | |
|---|---|
| Avg. | 10.1 |
| Std. Dev. | 0.9 |
| 95% C.L. | 1.4 |
| Gauge μm (mils) | 209 (8.23) |
| Std. Dev. | 6.35 (0.25) |
| 95% C.L. | 10.2 (0.40) |

Total
Transmission (%)[8]

| | |
|---|---|
| Avg. | 90.6 |
| Std. Dev. | 0.2 |
| 95% C.L. | 0.3 |

Gloss (45°)[9]

| | |
|---|---|
| Avg. | 51. |
| Std. Dev. | 1. |
| 95% C.L. | 2. |

Water Vapor
Transmission
at 38°C (100°F[10])

| | |
|---|---|
| Sample 1 | 1.06 |
| Sample 2 | 0.92 |
| Sample 3 | 0.84 |

Gauge μm (mils)

| | |
|---|---|
| Sample 1 | 219 (8.64) |
| Sample 2 | 226 (8.89) |
| Sample 3 | 225 (8.86) |

The following footnotes apply to Tables 1 and 2.

[1]ASTM D882-81.

[2]All average values in Tables 1 and 2 are averages obtained from four (4) replicate measurements.

[3]C.L is Confidence Limit - for example, in a reported average value of 10 with a 95% C.L. of 2, in 100 replicate readings, 95 would have a value between 8 and 12 inclusive.

[4]Gauge measured in μm (mils). Values listed are for corresponding examples. Gauge values for tensile at break apply for elongation at break as well. Gauge values for haze apply for other optical properties as well.

[5]ASTM D882-81.

[6]ASTM D882-81.

[7]ASTM D1003-61 (reapproved 1977).

[8] ASTM D1003 Method A.

[9] ASTM D2457-70 (reapproved 1977).

[10] ASTM F372.

Films in accordance with the present invention are cross-linked. This is preferably done by irradiation, i.e. bombarding the film with particulate and non-particulate radiations such as high energy electrons from an accelerator or cobalt-60 gamma rays, to cross-link the materials of the film. Cross-linking increases the structural strength of film and/or the force at which the material can be stretched before tearing apart, and may also improve the optical properties of the film and change the high temperature properties of the film. A preferred irradiation dosage level is in the range of from 20 to 50 kGy (2 Megarads (M.R.) to 5 M.R). In the case of films having a copolyester, lower dosages of irradiation may be required to keep extractables at a tolerable level.

Cross-linking may also be accomplished chemically by the use of peroxides.

Pouches made in accordance with the present invention may be heat sealed by various means well known in the art. Impulse and hot bar sealing are preferred means. Some structures having a relatively thick layer of EVA may be sealed by radio-frequency sealing.

The films according to the present invention are obtainable by cast coextrusion. A hot blown process would provide a pouch having optical properties inferior to those from a cast coextrusion process.

An important property of a flexible medical solution bag is the moisture vapor transmission rate. Typically, the concentrations of the medical solutions inside the pouch must be carefully maintained. Pouches or bags currently made from PVC require moisture barrier materials in an overwrap arrangement i.e. a separate overwrap material, to insure that the concentration of solutions obtained in the pouch is not affected.

Another key feature of the present invention, and of importance in medical solution packaging is the flexibility and collapsibility of the laminate material. Flexibility aids in the drainage of a medical solution from the bag or pouch.

The structure of Example 3 is listed below, beginning with the outside layer and ending with the inside or sealant layer. Example 3 includes commercial materials as in Example 2, except that the EPC for Example 3 was M7853-368A; a polyallomer EPC block copolymer, melt flow index of about 12, from Eastman; and the EVA of example 3 was Exxon XQ92.36, 28% vinyl acetate, melt flow index of about 2.0.

Example 3: EPC/EVA/EPC.

The above Example was irradiated with 30 kGy (3 MR) irradiation.

The film was about 229 $\mu$m (9 mil) thickness

Table 3 appearing below shows the results of physical testing of example 3 for selected physical properties. The footnote numbers appearing in Table 3 correspond to those for Tables 1-2, and designate ASTM test methodology.

## TABLE 3

## EXAMPLE 3

Tensile at Break
and 23°C (73°F) $\left(g/cm^2 \times 100\right)$ (PSI[1] (x 100)) _kPa X100_

| | | | |
|---|---|---|---|
| Av.[2] Long | 3490 | (49.7) | 342.7 |
| Std. Dev. | 752 | (10.7) | 73.8 |
| 95% C.L.[3] | 1200 | (17.0) | 117.2 |
| Av. Trans. | 2390 | (34.0) | 234.4 |
| Std. Dev. | 211 | (3.0) | 20.7 |
| 95% C.L. | 337 | (4.8) | 33.1 |
| Gauge Long.[4] μm (mils) | 264 | (10.38) | 71.6 |
| Std. Dev. | 18.0 | (0.71) | 4.9 |
| 95% C.L. | 29.0 | (1.14) | 7.9 |
| Gauge Trans. μm (mils) | 258 | (10.15) | 70.0 |
| Std. Dev. | 4.32 | (0.17) | 1.2 |
| 95% C.L. | 7.11 | (0.28) | 1.9 |

Elongation at
Break and 23°C (73°F) $\left(g/cm^2\right)$ (PSI[5]) _kPa_

| | | | |
|---|---|---|---|
| Av. Long | 69000 | (982) | 6770.6 |
| Std. Dev. | 4570 | (65) | 448.2 |
| 95% C.L. | 7310 | (104) | 717.1 |
| Av. Trans. | 64800 | (921) | 6350.1 |
| Std. Dev. | 2600 | (37) | 255.1 |
| 95% C.L. | 4220 | (60) | 413.7 |

Modulus at
23°C (73°F) $\left(g/cm^2 \times 1000\right)$ (PSI[6] x (1000)) _kPa X1000_

| | | | |
|---|---|---|---|
| Av. Long | 1110 | (15.8) | 108.9 |
| Std. Dev. | 253 | (3.6) | 24.8 |
| 95% C.L. | 401 | (5.7) | 39.3 |
| Av. Trans. | 1010 | (14.3) | 98.6 |
| Std. Dev. | 204 | (2.9) | 20.0 |
| 95% C.L. | 323 | (4.6) | 31.7 |
| Gauge Long. μm (mils) | 244 | (9.62) | 66.3 |
| Std. Dev. | 6.35 | (0.25) | 1.7 |
| 95% C.L. | 10.2 | (0.40) | 2.8 |
| Gauge Trans. μm (mils) | 272 | (10.70) | 73.8 |
| Std. Dev. | 7.37 | (0.29) | 2.0 |
| 95% C.L. | 11.7 | (0.46) | 3.2 |

## EXAMPLE 3

**Optical**
**Properties at 23°C (73°F)**

**Haze (%)[7]**

| | | |
|---|---|---|
| Avg. | 2.2 | |
| Std. Dev. | 0.1 | |
| 95% C.L. | 0.2 | |
| Gauge μm (mils) | 272 | (10.70) |
| Std. Dev. | 12.4 | (0.49) |
| 95% C.L. | 19.8 | (0.78) |

**Total**
**Transmission (%)[8]**

| | |
|---|---|
| Avg. | 92.7 |
| Std. Dev. | 0.1 |
| 95% C.L. | 0.1 |

**Water Vapor**
**Transmission**
**at 38°C (100°F[10])**

| | |
|---|---|
| Sample 1 | 0.78 |
| Sample 2 | 0.60 |
| Sample 3 | 0.70 |

**Gauge μm (mils)**

| | | |
|---|---|---|
| Sample 1 | 270 | (10.62) |
| Sample 2 | 250 | (9.83) |
| Sample 3 | 266 | (10.48) |

The laminated films of the present invention also exhibit good seal strength, and abuse resistance, and do not substantially distort during autoclaving.

It should be noted that the detailed description and specific examples which indicate the presently preferred embodiments of the invention are given by way of illustration only.

**Claims**

1. A flexible film comprising a layer of an ethylene vinyl acetate copolymer, and on each side of the said layer, and attached directly thereto, a layer of an ethylene propylene copolymer, said film being cross-linked, the film having a modulus of less than 344.7 MPa (50,000 PSI) and being obtainable by cast coextrusion.

2. A flexible film according to claim 1 having a modulus of less than 275.8 MPA (40,000 PSI).

3. A flexible film according to claim 1 wherein the film is cross-linked by irradiation.

4. A flexible film according to claim 3 wherein the film is cross-linked by irradiation at a dosage level between 2 MR and 5 MR (20 and 50 KGy).

5. A flexible film according to claim 1 wherein the film is cross-linked by chemical cross-linking agents.

6. A flexible film according to claim 1 wherein the ethylene propylene copolymer comprises less than 6% of ethylene.

7. A flexible film according to claim 1 wherein the layer of ethylene vinyl acetate copolymer is thicker than either of the other layers.

8. A flexible pouch made from a film of any of claims 1 to 7.

**Patentansprüche**

1. Flexible Folie, enthaltend eine Schicht eines Ethylenvinylacetatcopolymers und auf jeder Seite dieser Schicht und direkt damit verbunden eine Schicht eines Ethylenpropylencopolymers, wobei die Folie vernetzt ist und einen Modul von weniger als 344,7 MPa (50.000 PSI) aufweist und durch Gieß-Coextrusion erhältlich ist.

2. Flexible Folie gemäß Anspruch 1, die einen Modul von weniger als 275,8 MPa (40.000 PSI) aufweist.

3. Flexible Folie gemäß Anspruch 1, wobei die Folie durch Bestrahlung vernetzt ist.

4. Flexible Folie gemäß Anspruch 3, wobei die Folie durch Bestrahlung mit einer Strahlendosis zwischen 2 MR und 5 MR (20 and 50 KGy) vernetzt ist.

5. Flexible Folie gemäß Anspruch 1, wobei die Folie durch chemische Vernetzungsmittel vernetzt ist.

6. Flexible Folie gemäß Anspruch 1, wobei das Ethylenpropylencopolymer weniger als 6 % Ethylen enthält.

7. Flexible Folie gemäß Anspruch 1, wobei die Schicht des Ethylenvinylacetatcopolymers dicker als jede der anderen Schichten ist.

8. Flexibler Beutel, der aus einer Folie gemäß einem der Ansprüche 1 bis 7 hergestellt ist.

**Revendications**

1. Film flexible comprenant une couche d'un copolymère éthylène acétate de vinyle, et sur chaque côté de ladite couche, et attachée directement à celle-ci, une couche d'un copolymère éthylène propylène, ledit film étant réticulé, le film ayant un module inférieur à 344,7 MPa (50 000 PSI) et pouvant être obtenu par coextrusion fondue.

2. Film flexible selon la revendication 1 ayant un module inférieur à 275,8 MPa (40 000 PSI).

3. Film flexible selon la revendication 1 dans lequel le film est réticulé par irradiation.

4. Film flexible selon la revendication 3 dans lequel le film est réticulé par irradiation à un niveau de dosage entre 2 MR et 5 MR (20 et 50 KGy).

5. Film flexible selon la revendication 1 dans lequel le film est réticulé par des agents de réticulation chimiques.

6. Film flexible selon la revendication 1 dans lequel le copolymère éthylène comprend moins de 6% d'éthylène.

7. Film flexible selon la revendication 1 dans lequel la couche de copolymère acétate de vinyle est plus épaisse que l'une ou l'autre des autres couches.

8. Poche flexible faite d'un film selon l'une quelconque des revendications 1 à 7.

## FIG. 1